# EUROPÄISCHE PATENTANMELDUNG

(11) **EP 3 789 145 A1**
(43) Veröffentlichungstag der Anmeldung: **10.03.2021**
(21) Anmeldenummer: 19020518.7
(22) Anmeldetag: 06.09.2019
(51) Int. Cl.: B23D 49/16, B23D 57/00, B23D 51/12, F16B 2/18

(54) **ELEKTRISCH BETÄTIGBARE HANDSÄGE**

(71) Anmelder: Scheppach Fabrikation von Holzbearbeitungsmaschinen GmbH, 89335 Ichenhausen (DE)
(72) Erfinder: Bindhammer, Markus, 89335 Ichenhausen (DE)
(74) Vertreter: Patentanwälte Munk

(57) **Zusammenfassung**

Bei einer elektrisch betätigbaren Handsäge mit einem Gehäuse (1) zur Aufnahme einer Antriebseinrichtung, an dem ein Griff (2) angebracht ist und aus dem auf der vom Griff (2) abgewandten Seite eine mit der Antriebseinrichtung zusammenwirkende Sägeblattaufnahmeeinrichtung (3) austritt, an der ein mit einem geeigneten Gegenstück (27) versehenes Sägeblatt (4) aufnehmbar ist, dessen vom Gehäuse abgewandtes Ende wahlweise frei endet oder beweglich auf dem freien Ende eines mittels einer Verschlusseinrichtung (8) lösbar am Gehäuse (1) anbringbaren Bügels (7) aufnehmbar ist, lässt sich dadurch eine hohe Bedienungs- und Kombinierfreundlichkeit erreichen, dass die Verschlusseinrichtung (8) einen am Gehäuse (1) angebrachten Halter (9) mit einer quer zur Richtung des Sägeblatts (4) verlaufenden, gehäusefernen Anlagefläche (13) und hieran anschließenden, quer hierzu gerichteten, von außen zugänglichen Begrenzungen (14) und einen mit dem Halter (9) in Eingriff bringbaren, am Bügel (7) angebrachten Gegenhalter (10) aufweist, der mit einer inneren Stützfläche (15) zur Anlage an der halterseitigen Anlagefläche (13) bringbar ist und eine seitliche Auskragung (16) aufweist, welche eine von außen zugängliche, quer zur Anlagefläche (13) gerichtete Begrenzung des Halters (9) umgreift, und dass der Halter (9) oder/und der Gegenhalter (10) auf der der Auskragung (16) gegenüberliegenden Seite eine äußere Keilfläche (18a, 18b) aufweist beziehungsweise aufweisen und mittels einer C-förmigen Klammer (11) umfassbar sind, die wenigstens eine mit der wenigstens einen äußeren Keilfläche (18a, 18b) in Eingriff bringbare, innere Keilfläche (19) aufweist und mittels einer zugeordneten, manuell betätigbaren Spanneinrichtung (12) mit dem Halter (9) und Gegenhalter (10) verspannbar ist.

## Beschreibung

Die Erfindung betrifft eine elektrisch betätigbare Handsäge mit einem Gehäuse zur Aufnahme einer Antriebseinrichtung, an dem ein Griff angebracht ist und aus dem auf der vom Griff abgewandten Seite eine mit der Antriebseinrichtung zusammenwirkende Sägeblattaufnahmeeinrichtung austritt, an der ein mit einem geeigneten Gegenstück versehenes Sägeblatt aufnehmbar ist, dessen vom Gehäuse abgewandtes Ende wahlweise frei endet oder beweglich auf dem freien Ende eines mittels einer Verschlusseinrichtung lösbar am Gehäuse anbringbaren Bügels aufnehmbar ist.

Eine elektrisch betätigbare Handsäge dieser Art ist aus der US 5,027,518 A bekannt. Anordnungen dieser Art ermöglichen in vorteilhafter Weise einen Umbau einer Bügelsäge in eine Säbelsäge und umgekehrt, indem der Bügel abgenommen beziehungsweise angesetzt wird. Bei der aus der oben genannten US 5,027,518 A bekannten Anordnung ist der Bügel durch Schrauben mit dem Gehäuse verschraubt oder durch Stifte mit dem Gehäuse verstiftet. Ein An- beziehungsweise Abbau des Bügels erweist sich daher als vergleichsweise umständlich, da die Schrauben oder Stifte nur mit geeigneten Werkzeugen betätigbar sind. Die bekannte Anordnung erweist sich daher als nicht kombinations- und bedienungsfreundlich genug.

Hiervon ausgehend ist es daher die Aufgabe der vorliegenden Erfindung, eine Anordnung eingangs erwähnter Art mit einfachen und kostengünstigen Mitteln so zu verbessern, dass eine hohe Kombinations- und Bedienungsfreundlichkeit gewährleistet sind.

Diese Aufgabe wird erfindungsgemäß dadurch gelöst, dass die Verschlusseinrichtung einen am Gehäuse angebrachten Halter mit einer quer zur Richtung des Sägeblatts verlaufenden, gehäusefernen Anlagefläche und hieran anschließenden, quer hierzu gerichteten, von außen zugänglichen Begrenzungen sowie einen mit dem Halter in Eingriff bringbaren, am Bügel angebrachten Gegenhalter aufweist, der mit einer inneren Stützfläche zur Anlage an der halterseitigen An lagefläche bringbar ist und eine seitliche Auskragung aufweist, welche eine von außen zugängliche, quer zur Anlagefläche gerichtete Begrenzung des Halters umgreift, und dass der Halter oder/und der Gegenhalter auf der der Auskragung gegenüberliegenden Seite eine äußere Keilfläche aufweist beziehungsweise aufweisen und mittels einer C-förmigen Klammer umfassbar sind, die wenigstens eine mit der wenigstens einen äußeren Keilfläche in Eingriff bringbare, innere Keilfläche aufweist und mittels einer zugeordneten, manuell betätigbaren Spanneinrichtung mit dem Halter und dem Gegenhalter verspannbar ist.

Diese Maßnahmen ermöglichen in vorteilhafter Weise eine werkzeuglose Umrüstung der erfindungsgemäßen Säge von einer Bügelsäge auf eine Säbelsäge und umgekehrt. Durch Lösen der Spanneinrichtung wird die C-förmige Klammer gelockert, so dass die anderen Teile der Verschlusseinrichtung einfach außer Eingriff gebracht werden können und umgekehrt. Mit den erfindungsgemäßen Maßnahmen wird daher die oben genannte Aufgabe auf höchst einfache und kostengünstige Weise gelöst.

Vorteilhafte Ausgestaltungen und zweckmäßige Fortbildungen der übergeordneten Maßnahmen sind in den Unteransprüchen angegeben.

So kann vorteilhaft vorgesehen sein, dass der Halter und der Gegenhalter auf der der Auskragung gegenüberliegenden Seite jeweils eine äußere Keilfläche aufweisen, wobei diese beiden Keilflächen voneinander abgewandt und V-förmig gegeneinander geneigt sind und wobei die C-förmige Klammer zwei den äußeren Keilflächen zugeordnete, innere Keilflächen aufweist. Da die Klammer hier mit ihren inneren Keilflächen mit halter- und gegenhalterseitig vorgesehenen äußeren Keilflächen zusammenwirkt, werden diese Teile gleichmäßig aneinander angestellt und genügt bereits eine geringe Verstellung der Klammer, um große Anstellkräfte zu erzeugen.

Eine weitere vorteilhafte Maßnahme kann darin bestehen, dass der Halter prismenförmig mit einer nach Art eines langgestreckten Sechsecks gestalteten Grundfläche ausgebildet ist. Auf diese Weise ergibt sich eine vergleichsweise große seitliche Anlagefläche sowie hieran anschließende, pfeilförmige Begrenzungen, die einen spielfreien Eingriff in eine zugeordnete V-Nut ermöglichen. Zweckmäßig ist daher der Gegenhalter im Bereich seiner Auskragung mit einer entsprechenden, inneren V-Nut versehen.

In weiterer Fortbildung der übergeordneten Maßnahmen kann die Spanneinrichtung einen mit einem Griff versehenen Exzenter aufweisen, der drehbar auf einer Achse aufgenommen ist, die an einem Haltestift befestigt ist, der die C-förmige Klammer durchgreift und mit seinem achsfernen Ende am Halter oder Gegenhalter abgestützt ist. Diese Maßnahmen ergeben in vorteilhafter Weise eine kraftschlüssige Exzenterspanneinrichtung, die einfach manuell bedienbar ist.

Zweckmäßig kann dabei die Klammer mit einer mittleren Bohrung versehen sein, die über einander zu einem Kanal ergänzende Nuten des Halters und des Gegenhalters mit einer fluchtenden, im Bereich der Auskragung des Gegenhalters vorgesehenen Bohrung verbunden ist, die der Stift mit einem an seinem freien Ende vorgesehenen Gewinde durchgreift, auf das eine an der Außenseite der Auskragung abstützbare Stützmutter aufschraubbar ist. Auf diese Weise ist sichergestellt, dass der Bügel samt hieran angebrachtem Gegenhalter nach Lösen der Spanneinrichtung einfach vom Halter abnehmbar ist.

Eine weitere vorteilhafte Maßnahme kann darin bestehen, dass das mit einem Ende in die Sägeblattaufnahmeeinrichtung einspannbare Sägeblatt am anderen Ende einen Fortsatz aufweist, der auf dem am Gehäuse anbringbaren Bügel geführt und beweglich gelagert ist. Hierdurch wird die Gefahr von Schwingungen des Sägeblatts quer zu seiner Bewegungsrichtung minimiert.

Zweckmäßig kann der Bügel im Bereich seines gehäusefernen Endes mit einer dem Ansatz des Sägeblatts zugeordneten Führungsnut versehen sein, die von einem Stift durchsetzt ist, der ein Langloch des vorzugsweise hierzu U-förmig ausgebildeten Ansatzes des Sägeblatts durchgreift. Diese Maßnahmen stellen sicher, dass das Sägeblatt nicht nur zuverlässig geführt und gelagert wird, sondern der Bügel nach gehäuseseitiger Lösung auch einfach vom Sägeblatt abgezogen werden kann.

Eine weitere günstige Maßnahme kann darin bestehen, dass die Antriebseinrichtung einen mittels mindestens eines im Griff unterbringbaren Akkus mit Strom versorgbar ist. Die Unterbringung des Akkus im Griff ergibt eine platzsparende Anordnung. Da infolge der Verwendung eines Akkus keine Kabelverbindungen erforderlich sind, wird auch die Arbeitssicherheit und Bedienungsfreundlichkeit gesteigert.

Zur weiteren Erhöhung der Arbeitssicherheit können die Sägeblattaufnahmeeinrichtung durch einen am Gehäuse anbringbaren Sägeschuh und der gehäuseferne Endbereich des Sägeblatts durch einen weiteren, am Bügel anbringbaren Sägeschuh gegen Eingriff geschützt werden.

Weitere vorteilhafte Ausgestaltungen und zweckmäßige Fortbildungen der übergeordneten Maßnahmen sind in den restlichen Unteransprüchen angegeben und insbesondere aus der nachstehenden Beispielsbeschreibung anhand der Zeichnung näher entnehmbar.

In der nachstehend beschriebenen Zeichnung zeigen:
- Figur 1: eine Ansicht einer erfindungsgemäßen Handsäge,
- Figur 2: eine Explosionsdarstellung der Verschlusseinrichtung der Anordnung gemäß Figur 1 und
- Figur 3: eine Ansicht des Sägeblatts der Anordnung gemäß Figur 1.

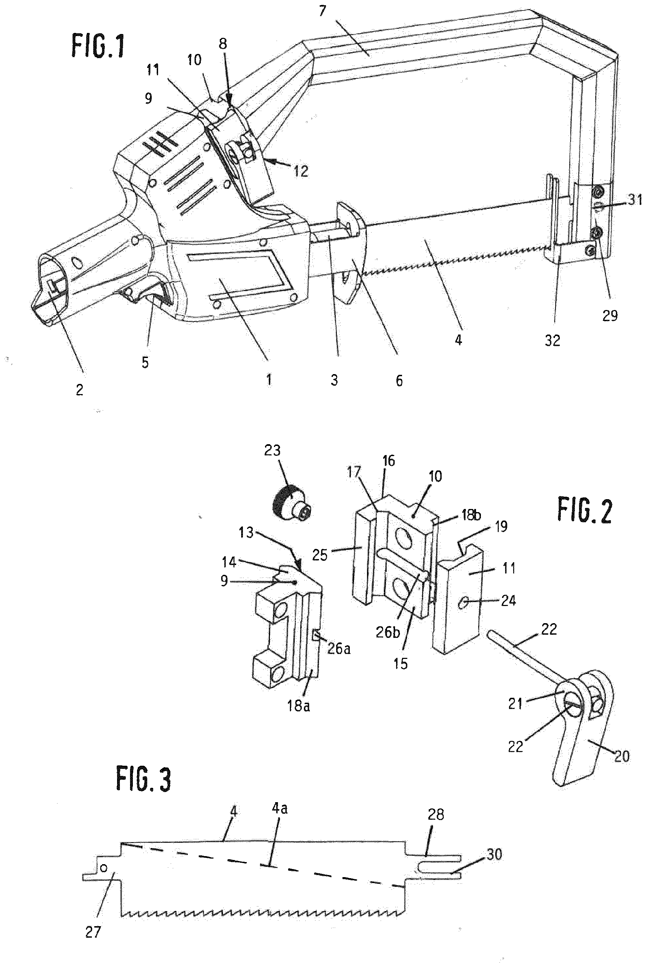

Die der Figur 1 zugrundeliegende Handsäge kann ausgehend von einem Grundgerät in Form einer Säbelsäge zu einer Bügelsäge ergänzt werden und umgekehrt. Das eine Säbelsäge bildende Grundgerät enthält ein Gehäuse 1, an dem ein Griff 2 angebracht ist und aus dem an der grifffernen Seite eine Sägeblattaufnahmeeinrichtung 3 austritt, in die ein mit einem geeigneten Anschlussstück versehenes Sägeblatt 4 einspannbar ist und die mittels einer im Gehäuse 1 untergebrachten, hier nicht näher dargestellten Antriebseinrichtung in Längsrichtung hin- und hergehend antreibbar ist.

Die nicht näher dargestellte Antriebseinrichtung enthält einen elektrischen Antriebsmotor, der einem mit der Sägeblattaufnahmeeinrichtung 3 zusammenwirkenden Antriebsstrang vorgeordnet und mittels einer zugeordneten Leistungselektronik steuerbar sein kann. Alle diese Elemente der Antriebseinrichtung sind im Gehäuse 1 untergebracht. Der Antriebsmotor ist zur Vermeidung von Resonanzerscheinungen in einem Winkel zur Hubbewegung des Sägeblatts 4 angeordnet. Der als Elektromotor ausgebildete Antriebsmotor kann über ein Kabel mit Strom versorgt werden. Zweckmäßig erfolgt die Stromversorgung des Antriebsmotors jedoch über einen Akku, der in das Gehäuse 1, hier in den mit einem geeigneten Aufnahmefach versehenen Griff 2 eingesetzt werden kann. Zum Ein- und Ausschalten des Antriebsmotors ist an der Außenseite des Gehäuses 1 oder Griffs 2 ein Schalter 5 vorgesehen. Dieser kann zweckmäßig als Tastschalter ausgebildet sein, der die Stromversorgung des Elektromotors nur so lange freigibt, solange er gedrückt wird. Dieser Schalter fungiert daher als sogenannter Totmannschalter, wodurch sich eine hohe Arbeitssicherheit ergibt.

Die Sägeblattaufnahmeeinrichtung 3 kann vorteilhaft als ½"-Universalaufnahme ausgebildet sein, so dass ein mit einem geeigneten Gegenstück versehenes Sägeblatt einfach durch Drehen oder Kippen des Gehäuses 1 gelöst werden kann und umgekehrt. Zur Erhöhung der Arbeitssicherheit ist die Sägeblattaufnahmeeinrichtung 3 seitlich und zum Werkstück hin durch einen zugeordneten Sägeschuh 6 abgedeckt und damit geschützt.

Bei dem der Figur 1 zugrundeliegenden Beispiel ist das zur Bildung einer Säbelsäge geeignete Grundgerät durch einen am Gehäuse 1 angesetzten Bügel 7 zu einer Bügelsäge ergänzt. Der Bügel 7 ist lösbar am Gehäuse 1 anbringbar. Hierzu ist eine einen schnellen und einfachen An- und Abbau des Bügels 7 gewährleistende Verschlusseinrichtung 8 vorgesehen. Diese enthält in gegenseitigen formschlüssigen Eingriff bringbare und kraftschlüssig miteinander verspannbare, gehäuse- und bügelseitig vorgesehene Teile. Die Verschlusseinrichtung 8 enthält einen am Gehäuse 1 angebrachten Halter 9 und einen diesem zugeordneten, am Bügel 7 angebrachten Gegenhalter 10 sowie eine C-förmige Klammer 11, welche mittels einer zugeordneten Spanneinrichtung 12 betätigbar ist und durch die der Halter 9 und der Gegenhalter 10 aneinander anpressbar sind.

Der am Gehäuse 1 befestigte Halter 9 ist, wie aus Figur 2 anschaulich erkennbar ist, prismenförmig ausgebildet und besitzt auf der gehäusefernen Seite eine quer zur Bewegungsrichtung des Sägeblatts 4 verlaufende, seitliche Anlagefläche 13. Hieran schließen sich quer zur Anlagefläche 13 gerichtete Begrenzungen 14 des prismenförmigen Halters 9 an, die von außen zugänglich sind. Im dargestellten Beispiel hat die Grundfläche des dem Halter 9 zugrundeliegenden Prismas die Form eines langgestreckten Sechsecks, so dass sich eine breite Anlagefläche 13 sowie hieran anschließende, pfeilförmige Begrenzungen 14 ergeben.

Der am Bügel 7 angebrachte Gegenhalter 10 besitzt, wie Figur 2 weiter erkennen lässt, eine zur Außenkontur des prismenförmigen Halters 9 negative, das heißt hierzu passende Innenkontur mit einer der Anlagefläche 13 zugewandten, inneren Stützfläche 15 und einer an einer Seite hieran anschließenden seitlichen Auskragung 16, welche eine zugeordnete, an die Anlagefläche 13 anschließende Begrenzung 14 des Halters 9 umfasst, so dass der Gegenhalter 10 am Halter 9 eingehakt werden kann. Die Auskragung 16 besitzt eine dem pfeilförmigen Querschnitt der zugeordneten halterseitigen Begrenzung 14 zugeordnete, hierzu negative V-Nut 17, so dass ein zuverlässiger gegenseitiger Sitz erreicht wird. Die Nut 17 und die zugeordnete Begrenzung 14 sind durch seitliche Stege begrenzt, die so dimensioniert sind, dass sie bei an den Halter 9 angesetztem Gegenhalter 10 einander nicht oder nur leicht berühren und damit den zuverlässigen Sitz den pfeilförmigen Begrenzung 14 in der zugeordneten V-Nut 17 nicht behindern.

Der Halter 9 und der Gegenhalter 10 besitzen auf der von der Auskragung 16 abgewandten Seite voneinander abgewandte, V-förmig gegeneinander geneigte, äußere Keilflächen 18a, 18b, das heißt die eine Keilfläche 18a ist halterseitig und die andere Keilfläche 18b ist gegenhalterseitig vorgesehen. Mit diesem halter- und gegenhalterseitig vorgesehenen Keilflächenpaar ist die C-förmige Klammer 11 in Eingriff bringbar, die zu den genannten äußeren Keilflächen 18a, 18b von Halter 9 und Gegenhalter 10 parallele innere Keilflächen 19 aufweist. Die Klammer 11 ist mittels der Spanneinrichtung 12 an den Halter 9 und den hieran eingehakten und anliegenden Gegenhalter 10 anstellbar, wobei die Anstellkraft durch die miteinander zusammenwirkenden Keilflächen in eine quer hierzu gerichtete Anpresskraft umgesetzt wird.

Die Spanneinrichtung 12 ist als Exzenterspanneinrichtung ausgebildet, die einen mit einem Griff 20 versehenen Exzenter 21 aufweist, der drehbar auf einer Achse 22 gelagert ist, die an einem Haltestift 21 befestigt ist, der die Klammer 11 durchgreift und mit seinem achsfernen Ende am Halter 9 oder Gegenhalter 10, hier am Gegenhalter 10, abgestützt ist. Hierzu ist eine an der Außenseite der Auskragung 16 des Gegenhalters 10 abstützbare Stützmutter 23 vorgesehen, welche auf das achsferne, mit einem Gewinde versehene Ende des Haltestifts 22 aufschraubbar ist, dem eine mittlere Bohrung 24 der Klammer 11 sowie eine hiermit fluchtende Bohrung 25 der Auskragung 26 und ein hiermit fluchtender, durch einander zu einem Kanal ergänzende Nuten 26a, b des Halters 9 und des Gegenhalters 10 gebildeter Kanal zugeordnet ist, so dass sich eine durchgehende Durchsteckausnehmung für den Haltestift 22 ergibt.

Sofern die vorliegende Handsäge als Säbelsäge verwendet wird, findet ein säbelsägenspezifisches Sägeblatt 4a Verwendung, dessen der Einspannung in der Sägeblattaufnahmeeinrichtung 3 gegenüberliegendes Ende frei endet. Ein derartiges Sägeblatt 4a ist in Figur 3 mit einer unterbrochenen Linie angedeutet. Dem der Figur 1 zugrundeliegenden Beispiel liegt eine Verwendung der vorliegenden Handsäge als Bügelsäge zugrunde. Dabei findet ein bügelsägenspezifisches Sägeblatt 4 Verwendung. Dieses hat an seinem seinem in der Sägeblattaufnahmeeinrichtung 3 aufnehmbaren Einspannstück 27 gegenüberliegenden Ende einen zungenförmigen Fortsatz 28, der auf dem gehäusefernen Endbereich des Bügels 7 beweglich gelagert und geführt ist.

Der Bügel 7 ist hierzu im Bereich seines gehäusefernen Endes mit einer durch einen Seitendeckel 29 verschließbaren Führungsnut versehen, in welche der Zungenansatz 28 eingreift, wodurch Schwingungen des Sägeblatts 4 quer zu seiner Längs- und damit Bewegungsrichtung minimiert werden. Zusätzlich zu dem Eingriff des Zungenfortsatzes 28 in die zugeordnete Führungsnut des Bügels 7 kann eine Stift-Schlitzführung vorgesehen sein. Hierzu ist der Zungenfortsatz 28 U-förmig gestaltet, so dass sich ein hinten offenes Langloch 30 ergibt, das von einem in Figur 1 mit unterbrochenen Linien angedeuteten Querstift 31 des Bügels 7 durchsetzt wird. Auf diese Weise ergibt sich eine besonders genaue, bewegliche Lagerung des gehäusefernen Endes des in seiner Längsrichtung hin- und herbewegbaren Sägeblatts 4 auf dem gehäusefernen Endbereich des Bügels 7. Da das Langloch 30 hinten offen ist, kann der Bügel 7 bei der Demontage einfach nach hinten abgezogen werden und umgekehrt. Zur Erhöhung der Sicherheit kann auch dem beweglich auf dem Bügel 7 gelagerten Endbereich des Sägeblatts 4 ein zweiter Sägeschuh 32 zugeordnet sein, der hier am Deckel 29 angebracht sein kann.

## Patentansprüche

1. Elektrisch betätigbare Handsäge mit einem Gehäuse (1) zur Aufnahme einer Antriebseinrichtung, an dem ein Griff (2) angebracht ist und aus dem auf der vom Griff (2) abgewandten Seite eine mit der Antriebseinrichtung zusammenwirkende Sägeblattaufnahmeeinrichtung (3) austritt, an der ein mit einem geeigneten Gegenstück (27) versehenes Sägeblatt (4) aufnehmbar ist, dessen vom Gehäuse abgewandtes Ende wahlweise frei endet oder beweglich auf dem freien Ende eines mittels einer Verschlusseinrichtung (8) lösbar am Gehäuse (1) anbringbaren Bügels (7) aufnehmbar ist, **dadurch gekennzeichnet, dass** die Verschlusseinrichtung (8) einen am Gehäuse (1) angebrachten Halter (9) mit einer quer zur Richtung des Sägeblatts (4) verlaufenden, gehäusefernen Anlagefläche (13) und hieran anschließenden, quer hierzu gerichteten, von außen zugänglichen Begrenzungen (14) und einen mit dem Halter (9) in Eingriff bringbaren, am Bügel (7) angebrachten Gegenhalter (10) aufweist, der mit einer inneren Stützfläche (15) zur Anlage an der halterseitigen Anlagefläche (13) bringbar ist und eine seitliche Auskragung (16) aufweist, welche eine von außen zugängliche, quer zur Anlagefläche (13) gerichtete Begrenzung des Halters (9) umgreift, und dass der Halter (9) oder/und der Gegenhalter (10) auf der der Auskragung (16) gegenüberliegenden Seite eine äußere Keilfläche (18a, 18b) aufweist beziehungsweise aufweisen und mittels einer C-förmigen Klammer (11) umfassbar sind, die wenigstens eine mit der wenigstens einen äußeren Keilfläche (18a, 18b) in Eingriff bringbare, innere Keilfläche (19) aufweist und mittels einer zugeordneten, manuell betätigbaren Spanneinrichtung (12) mit dem Halter (9) und Gegenhalter (10) verspannbar ist.

2. Handsäge nach Anspruch 1, **dadurch gekennzeichnet, dass** der Halter (9) und der Gegenhalter (10) auf der der Auskragung (16) gegenüberliegenden Seite jeweils eine äußere Keilfläche (18a, 18b) aufweisen, wobei die halterseitige Keilfläche (18a) und die gegenhalterseitige Keilfläche (18b) voneinander abgewandt und V-förmig gegeneinander geneigt sind und wobei die Klammer (11) zwei innere, den äußeren Keilflächen (18a, 18b) von Halter (9) und Gegenhalter (10) zugeordnete innere Keilflächen (19) aufweist.

3. Säge nach Anspruch 2, **dadurch gekennzeichnet, dass** der Halter (9) prismenförmig mit einer nach Art eines langgestreckten Sechsecks gestalteten Grundfläche ausgebildet ist.

4. Handsäge nach Anspruch 3, **dadurch gekennzeichnet, dass** der Gegenhalter (10) im Bereich seiner Auskragung (16) eine dem keilförmigen Endbereich (14) des Halters (9) zugeordnete, im Querschnitt V-förmige Nut (17) aufweist.

5. Handsäge nach einem der vorhergehenden Ansprüche, **dadurch gekennzeichnet, dass** die Spanneinrichtung (12) einen mit einem Griff (20) versehenen Exzenter (21) aufweist, der drehbar auf einer Achse (22) aufgenommen ist, die an einem Haltestift (22) befestigt ist, der die Klammer (11) durchgreift und mit seinem achsfernen Ende am Halter (9) oder Gegenhalter (10) abgestützt ist.

6. Handsäge nach Anspruch (5), **dadurch gekennzeichnet, dass** die Klammer (11) mit einer mittleren Bohrung (24) versehenen ist, die über einander zu einem Kanal ergänzende Nuten (26a, 26b) von Halter (9) und Gegenhalter (10) mit einer fluchtenden, im Bereich der Auskragung (16) des Gegenhalters (10) vorgesehenen Bohrung verbunden ist, die der Haltestift (22) durchgreift, dessen Ende mit einem Gewinde versehen ist, auf das eine an der Außenseite der Auskragung (16) abstützbare Stützmutter (23) aufschraubbar ist.

7. Handsäge nach einem der vorhergehenden Ansprüche, **dadurch gekennzeichnet, dass** das Sägeblatt (4) an seinem vom in der Sägeblattaufnahmeeinrichtung (3) aufnehmbaren Ende gegenüberliegenden Ende einen Fortsatz (28) aufweist, der auf dem gehäusefernen Ende des am Gehäuse (1) angebrachten Bügels (7) beweglich geführt und gelagert ist.

8. Handsäge nach Anspruch 7, **dadurch gekennzeichnet, dass** der Bügel (7) im Bereich seines gehäusefernen Endes mit einer dem Fortsatz (28) des Sägeblatts (4) zugeordneten Führungsnut versehen ist, die von einem Stift (31) durchsetzt ist, der in ein Langloch (30) des Fortsatzes (28) des Sägeblatts (4) eingreift, der vorzugsweise U-förmig gestaltet ist.

9. Handsäge nach einem der vorhergehenden Ansprüche, **dadurch gekennzeichnet, dass** die Antriebseinrichtung einen mittels mindestens eines Akkus, der im Griff (2) aufnehmbar ist, mit Strom versorgbaren Elektromotor aufweist.

10. Handsäge nach einem der vorhergehenden Ansprüche, **dadurch gekennzeichnet, dass** die Sägeblattaufnahmeeinrichtung (3) durch einen am Gehäuse (1) anbringbaren Sägeschuh (6) gegen Eingriff geschützt ist.

11. Handsäge nach Anspruch 10, **dadurch gekennzeichnet, dass** der bügelnahe Endbereich des Sägeblatts (4) durch einen am Bügel (7) anbringbaren, zweiten Sägeschuh (32) gegen Eingriff geschützt ist.

12. Handsäge nach einem der vorhergehenden Ansprüche 8 bis 11, **dadurch gekennzeichnet, dass** die dem Fortsatz (28) des Sägeblatts (4) zugeordnete, bügelseitige Führungsnut durch einen am Bügel (7) seitlich anbringbaren Deckel (29) verschließbar ist, der vorzugsweise den zweiten Sägeschuh (32) trägt.

13. Handsäge nach einem der vorhergehenden Ansprüche, **dadurch gekennzeichnet, dass** die Sägeblattaufnahmeeinrichtung (3) als ½"-Universalaufnahme ausgebildet ist.

14. Handsäge nach einem der vorhergehenden Ansprüche, **dadurch gekennzeichnet, dass** der Antriebsmotor der Antriebseinrichtung in einem Winkel zur Längsrichtung des Sägeblatts (4) angeordnet ist.

## Geänderte Patentansprüche

### Geänderte Patentansprüche gemäss Regel 137(2) EPÜ.

1. Elektrisch betätigbare Handsäge mit einem Gehäuse (1) zur Aufnahme einer Antriebseinrichtung, an dem ein Griff (2) angebracht ist und aus dem auf der vom Griff (2) abgewandten Seite eine mit der Antriebseinrichtung zusammenwirkende Sägeblattaufnahmeeinrichtung (3) austritt, an der ein mit einem geeigneten Gegenstück (27) versehenes Sägeblatt (4) aufnehmbar ist, dessen vom Gehäuse abgewandtes Ende wahlweise frei endet oder beweglich auf dem freien Ende eines mittels einer Verschlusseinrichtung (8) lösbar am Gehäuse (1) anbringbaren Bügels (7) aufnehmbar ist, **dadurch gekennzeichnet, dass** die Verschlusseinrichtung (8) einen am Gehäuse (1) angebrachten Halter (9) mit einer quer zur Richtung des Sägeblatts (4) verlaufenden, gehäusefernen Anlagefläche (13) und hieran anschließenden, quer hierzu gerichteten, von außen zugänglichen Begrenzungen (14) und einen mit dem Halter (9) in Eingriff bringbaren, am Bügel (7) angebrachten Gegenhalter (10) aufweist, der mit einer inneren Stützfläche (15) zur Anlage an der halterseitigen Anlagefläche (13) bringbar ist und eine seitliche Auskragung (16) aufweist, welche eine von außen zugängliche, quer zur Anlagefläche (13) gerichtete Begrenzung des Halters (9) umgreift, und dass der Halter (9) oder/und der Gegenhalter (10) auf der der Auskragung (16) gegenüberliegenden Seite eine äußere Keilfläche (18a,18b) aufweist beziehungsweise aufweisen und mittels einer C-förmigen Klammer (11) der Handsäge umfassbar sind, die wenigstens eine mit der wenigstens einen äußeren Keilfläche (18a,18b) in Eingriff bringbare, innere Keilfläche (19) aufweist und mittels einer zugeordneten, manuell betätigbaren Spanneinrichtung (12) der Handsäge mit dem Halter (9) und Gegenhalter (10) verspannbar ist.

2. Handsäge nach Anspruch 1, **dadurch gekennzeichnet, dass** der Halter (9) und der Gegenhalter (10) auf der der Auskragung (16) gegenüberliegenden Seite jeweils eine äußere Keilfläche (18a,18b) aufweisen, wobei die halterseitige Keilfläche (18a) und die gegenhalterseitige Keilfläche (18b) voneinander abgewandt und V-förmig gegeneinander geneigt sind und wobei die Klammer (11) zwei innere, den äußeren Keilflächen (18a,18b) von Halter (9) und Gegenhalter (10) zugeordnete innere Keilflächen (19) aufweist.
